# EUROPEAN PATENT SPECIFICATION

(11) **EP 3 305 050 B1**
(45) Date of publication and mention of the grant of the patent: **27.10.2021**
(21) Application number: 17189175.7
(22) Date of filing: 04.09.2017
(51) Int. Cl.: A01B 59/00

(54) **LINK HOLDER**
VERBINDUNGSHALTER
SUPPORT DE LIAISON

(30) Priority: 07.10.2016 GB 201617032
(43) Date of publication of application: 11.04.2018
(73) Proprietor: AGCO International GmbH, 8212 Neuhausen am Rheinfall (CH)
(72) Inventor: Woelfle, Gottlieb, 87616 Marktoberdorf (DE); Gschwendtner, Christian, 87616 Marktoberdorf (DE)
(74) Representative: AGCO Intellectual Property Department

(56) References cited:
- EP-A1- 0 229 483
- EP-A1- 2 790 484
- DE-C1- 3 839 522
- GB-A- 906 761
- US-A- 3 394 948
- US-A- 4 241 935
- US-A1- 2007 014 497
- US-A1- 2010 038 882

## Description

The present invention relates to a link holder on a vehicle or machine and to a ball element component for the same. More specifically, this invention relates to a top link holder on a vehicle, or machine such as an agricultural tractor.

Vehicles, or machines such as agricultural tractors and agricultural machines are provided with hitch devices to enable an implement to be attached to them.

On an agricultural tractor for example, a top link holder is provided which can facilitate the handling of a top link of a three-point-hitch device on the rear of a tractor. The top link is pivotally attached to the tractor to allow movement about a horizontal axis. Movement about a vertical axis may also be possible. If the top link is not in use a top link holder holds the top link in a parking position which is a substantially vertical position so that it cannot move about the vertical or horizontal axis. If the operator has to couple the top link to an implement, the top link is released from the holder and the top link is pulled downwards to a coupling point of the implement. An example of a top link holder is described in the commonly-assigned European patent application EP-A-2790484.

Typically, top link holders comprise a crude metal rod pivotably attached at one end to a part of the tractor and at the other end having a means to engage and constrain the free end of the top link. To facilitate coupling to an implement, the free end of the top link is provided with a quick release hook, which hook has a mouth portion of a predetermined size to receive a coupling portion of an implement. A lever-operated retaining jaw is movable to partially close the mouth to prevent withdrawal of the coupling portion. The coupling portion typically comprises a ball element received in the hook mouth such as to enable a certain degree of pivoting movement of the implement relative to the hook without disengaging therefrom. A similar ball element may also be attached to the metal rod as the means to engage and constrain the free end of the top link. To engage the top link, the lever-operated retaining jaw is released, the link is raised to a position where the ball element of the link holder engages the mouth of the hook, following which the lever-operated retaining jaw is again operated to lock the ball element into the hook.

In accordance with a first aspect of the present invention there is provided a link holder for constraining movement of a pivotable link terminated by a quick release hook on a vehicle or machine, which hook has a mouth portion with an opening of a predetermined size when the hook is closed, wherein the link holder comprises an elongated body and a ball element attached to a first end of the elongated body, wherein the opposite end of the elongated body is attachable to the vehicle or machine, and wherein the ball element has a cross-section greater than the predetermined size and is formed to be compressible to a cross-section less than the predetermined size. With such a construction, the ball element can be clipped into engagement with a hook without requiring operation of a lever-operated retaining jaw.

The ball element preferably has a generally C-shaped cross section, and is formed of a resiliently flexible plastics material such as PA6. Alternately, the ball element may have a generally solid cross-section and be formed of a rubber material such as EPDM. Further alternately, the ball element may be comprised of first and second arcuate portions with one end of each pivotably connected to the other and further comprising resilient means (such as a spring or body of foam or other resiliently compressible material) positioned to urge the two arcuate portions apart. The elongated body may form a part of the ball element and, where the ball element is comprised of first and second arcuate portions with one end of each pivotably connected to the other, the elongated body may suitably form one of the arcuate portions.

The present invention further provides a ball element for use with the above link holder, having a generally C-shaped cross section wherein the ball element comprises first and second arcuate portions with one end of each pivotably connected to the other and further comprising resilient means positioned to urge the two arcuate portions apart.

The present invention still further provides an agricultural tractor having a three point implement mounting linkage including a pivotable top link terminated by a quick release hook, and a link holder as recited above deployable to constrain movement of the top link when the ball element is received in the mouth of the hook.

Embodiments of the invention will now be described, by way of example only, and with reference to the accompanying drawings in which:
Figure 1 is a side elevation of a top link of a three point implement mounting linkage constrained by a top link holder;
Figure 2 is a perspective view of the top link and top link holder of Figure 1;
Figure 3 is a perspective view of a first embodiment of ball element for use in the top link holder of Figures 1 and 2;
Figure 4 is a perspective view of a further embodiment of ball element for use in the top link holder of Figures 1 and 2; and
Figure 5 is a perspective view of a still further embodiment of ball element for use in the top link holder of Figures 1 and 2.

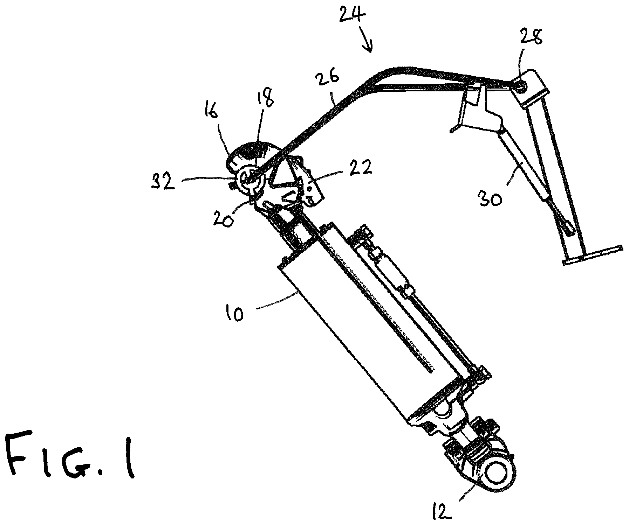

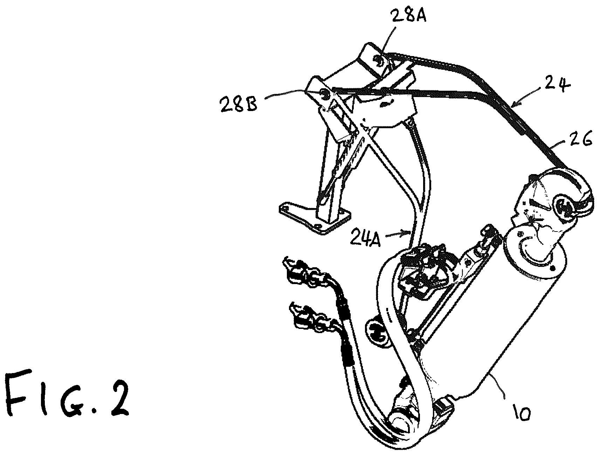

Figures 1 and 2 show an extendible top link 10 of a three point implement mounting linkage. At a lower end, the top link has a pivot joint 12 pivotably attaching the link 10 to the frame of a tractor (not shown). At the upper end, the top link has a quick release hook 16, which hook has a mouth 18, a lever-operated retaining bolt or jaw 20, and a jaw operating lever 22.

The pivot joint 12 allows the top link 10 to be moved about a horizontal axis and a vertical axis. In a parked position, as shown, the top link 10 extends upwards, and is constrained by a top link holder indicated generally at 24. The top link holder comprises an elongated body 26 pivotably attached at one end 28 to the tractor frame. Whilst the elongated body 26 may comprise a simple metal rod, a preferred construction is a Y-shaped frame as shown, having two laterally spaced points of attachment 28A, 28B to the tractor frame which provides improved lateral stability. One or more gas springs or dampers 30 are pivotably attached at a lower end to the tractor frame and at an upper end to the elongated body 28 to damp movement of the top link holder. This is particularly required when the top link holder 24 is not engaging the top link 10, but is instead swung downwardly to a non-deployed position as indicated at 24A in Figure 2.

At the free end of the elongated body 26, a right-angled portion of the body provides a mounting for a ball element 32. As shown in Figure 1, when the top link holder 24 is deployed, the ball element 32 is received in the mouth 18 of the quick release hook 16 and prevented from escaping by the lever-operated retaining bolt or jaw 20 which (if not closing it completely) reduces the size of the mouth opening to a dimension smaller than the diameter of the ball element 32.

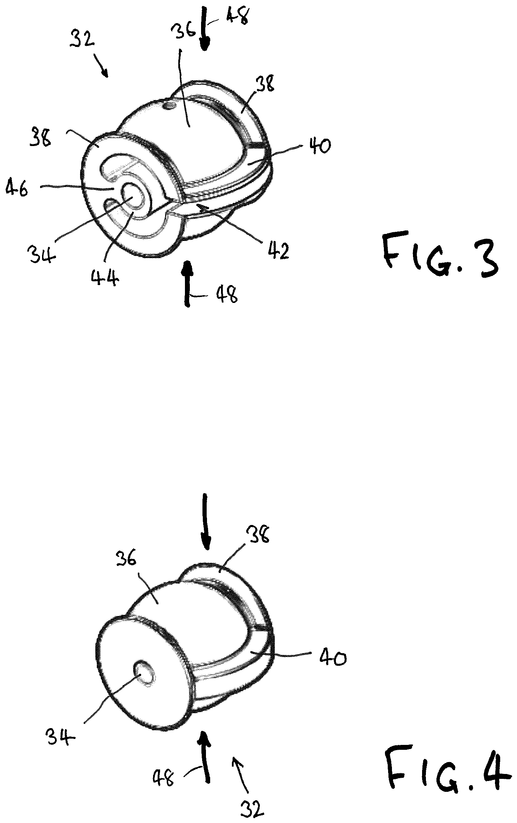

Figures 3 to 5 show alternative embodiments of ball element 32. In the embodiments of Figures 3 and 4, a bore 34 through the centre of a body portion 36 receives the right-angled portion of the elongated body 26 which provides a mounting support for the ball element 32. The body portion 36 may be generally cylindrical with a central axis on the bore 34 or, as shown, the cross-section through the body portion may vary along the length of the bore 34 such as to give the body portion 36 a substantially spherical shape. At either side of the body portion 36 (at either end of the bore 34) a radial flange 38 extending out from the bore 34 provides a lip to prevent the ball element from sliding sideways out of the mouth of the hook when engaged. A laterally extending flange 40, coplanar with the axis of the bore 34, prevents the ball element 32 from rotating within the mouth of the hook.

In the embodiment of Figure 3, the ball element 32 has a generally C-shaped cross section, with a laterally extending opening 42 following the lateral flange 40. Within the substantially hollow body portion, a central core 44 contains the bore 34. The central core 44 is supported with the outer part of the body portion by a laterally extending fillet 46 joining the two on the opposite side of the body portion to the opening 42. The ball element 32 is formed of a resiliently deformable plastics material, such as nylon or PA6. This enables the body portion 36 to be compressed as indicated by arrows 48 (closing up the lateral opening 42) such as to enable the ball element to be clipped into the mouth 18 of the hook 16 without releasing the lever-operated retaining bolt or jaw 20: once past the bolt or jaw 20, the body portion 36 springs back to its original diameter and cannot escape from the mouth.

In the alternative embodiment of Figure 4, the body portion 36 of the ball element 32 has a generally solid cross-section. In order to enable the ball element to be clipped into the mouth 18 of the hook 16 without releasing the lever-operated retaining bolt or jaw 20, the body portion 36 is formed of a rubber material, such as EPDM, having a greater degree of compressibility than the plastics material used in Figure 3.

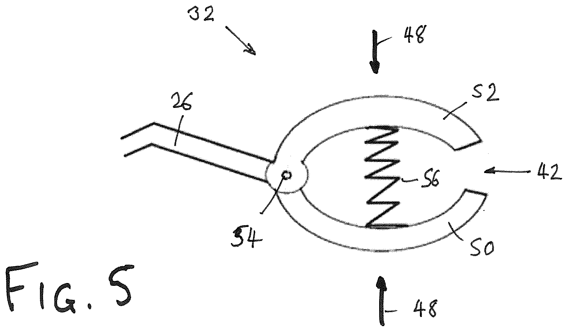

In the further alternative embodiment of Figure 5, the ball element 32 has a generally C-shaped cross section, being formed of first and second arcuate portions 50, 52 with one end of each pivotably connected to the other at 54. Resilient means 56 in the form of a spring or body of foam or other resiliently compressible material is positioned to urge the two arcuate portions apart. Preferably, one of the arcuate portions 50 is formed from the distal end of the elongated body 26 supporting the ball element 32.

In the foregoing the applicants have described a link holder for constraining movement of a pivotable link terminated by a quick release hook on a vehicle or machine, such as an implement mounting linkage of an agricultural tractor, including a ball element. The hook has a mouth portion with an opening of a predetermined size when the hook is closed, and the ball element has a cross-section greater than the predetermined size and is formed of resiliently flexible material compressible to a cross-section less than the predetermined size. This enables the ball element to engage the hook without opening it.

From reading the present disclosure, other modifications will be apparent to persons skilled in the art. Such modifications may involve other features which are already known in the field of agricultural machines and component parts thereof and which may be used instead of or in addition to features already described herein, and the scope of the invention is limited only by the following claims.

## Claims

1. A link holder (24) for constraining movement of a pivotable link (10) terminated by a quick release hook (16) on a vehicle or machine, which hook has a mouth portion with an opening of a predetermined size when the hook is closed, wherein the link holder (24) comprises an elongated body (26) and a ball element (32) attached to a first end of the elongated body, wherein the opposite end of the elongated body (26) is attachable to the vehicle or machine, and wherein the ball element (32) has a cross-section greater than the predetermined size and is formed to be compressible to a cross-section less than the predetermined size.

2. A link holder as claimed in claim 1, the ball element (32) having a generally C-shaped cross section.

3. A link holder as claimed in claim 2, the ball element (32) formed of a resiliently flexible plastics material.

4. A link holder as claimed in claim 3, wherein the plastics material of the ball element (32) is PA6.

5. A link holder as claimed in claim 1, the ball element (32) having a generally solid cross-section and being formed of a rubber material.

6. A link holder as claimed in claim 5, wherein the rubber material of the ball element (32) is EPDM.

7. A link holder as claimed in claim 2, the ball element (32) comprised of first and second arcuate portions (50, 52) with one end of each pivotably connected (54) to the other and further comprising resilient means (56) positioned to urge the two arcuate portions (50, 52) apart.

8. A link holder as claimed in claim 7, wherein the resilient means (56) of the ball element (32) is a spring or a body of resiliently compressible material.

9. A link holder as claimed in any one of claims 1-8, wherein the elongated body (26) forms a part of the ball element (32).

10. A ball element (32) for use with the link holder (24) of claim 1, having a generally C-shaped cross section wherein the ball element (32) comprises first and second arcuate portions (50, 52) with one end of each pivotably connected (54) to the other and further comprising resilient means (56) positioned to urge the two arcuate portions apart.

11. A ball element as claimed in claim 10, wherein the resilient means (56) of the ball element (32) is a spring or a body of resiliently compressible material.

12. An agricultural tractor having a three point implement mounting linkage including a pivotable top link (10) terminated by a quick release hook (16), and a link holder (24) as claimed in any one of claims 1-9 deployable to constrain movement of the top link when the ball element (32) is received in the mouth of the hook (16).

## Patentansprüche

1. Verbinderhalter (24) zum Einschränken der Bewegung eines schwenkbaren Verbinders (10), der durch einen Schnelllösehaken (16) an einem Fahrzeug oder einer Maschine abschließt, wobei der Haken einen Mündungsbereich mit einer Öffnung einer vorbestimmten Größe besitzt, wenn der Haken geschlossen ist, wobei der Verbinderhalter (24) einen langgestreckten Körper (26) und ein Ballelement (32) aufweist, das an einem ersten Ende des langgestreckten Körpers befestigt ist, wobei das entgegengesetzte Ende des langgestreckten Körpers (26) an dem Fahrzeug oder der Maschine befestigbar ist, und wobei das Ballelement (32) einen Querschnitt besitzt, der größer als die vorbestimmte Größe ist und ausgebildet ist, um auf einen Querschnitt kleiner als die vorbestimmte Größe komprimierbar zu sein.

2. Verbinderhalter nach Anspruch 1, wobei das Ballelement (32) einen im Wesentlichen C-förmigen Querschnitt besitzt.

3. Verbinderhalter nach Anspruch 2, wobei das Ballelement (32) aus einem elastischen flexiblen Kunststoffmaterial ausgebildet ist.

4. Verbinderhalter nach Anspruch 3, wobei das Kunststoffmaterial des Ballelements (32) PA6 ist.

5. Verbinderhalter nach Anspruch 1, wobei das Ballelement (32) einen im Wesentlichen festen Querschnitt besitzt und aus einem Gummimaterial ausgebildet ist.

6. Verbinderhalter nach Anspruch 5, wobei das Gummimaterial des Ballelements (32) EPDM ist.

7. Verbinderhalter nach Anspruch 2, wobei das Ballelement (32) aus einem ersten Bogenabschnitt (50) und einem zweiten Bogenabschnitt (52) gebildet ist, von denen jeweils ein Ende mit dem anderen schwenkbar verbunden ist (54), und weiterhin mit einem elastischen Mittel (56), das angeordnet ist, um die beiden Bogenabschnitte (50, 52) voneinander weg zu drängen.

8. Verbinderhalter nach Anspruch 7, wobei das elastische Mittel (56) des Ballelements (32) eine Feder oder ein Körper aus einem elastischen komprimierbaren Material ist.

9. Verbinderhalter nach mindestens einem der Ansprüche 1-8, wobei der langgestreckte Körper (26) einen Teil des Ballelements (32) bildet.

10. Ballelement (32) zur Verwendung mit dem Verbinderhalter (24) nach Anspruch 1, mit einem im Wesentlichen C-förmigen Querschnitt, wobei das Ballelement (32) einen ersten Bogenabschnitt (50) und einen zweiten Bogenabschnitt (52) aufweist ist, von denen jeweils ein Ende mit dem anderen schwenkbar verbunden ist (54), und weiterhin mit einem elastischen Mittel (56), das angeordnet ist, um die beiden Bogenabschnitte voneinander weg zu drängen.

11. Ballelement (32) nach Anspruch 10, wobei das elastische Mittel (56) des Ballelements (32) eine Feder oder ein Körper aus einem elastischen komprimierbaren Material ist.

12. Landwirtschaftlicher Traktor mit einem Dreipunkt-Montageverbinder für ein Arbeitsgerät, mit einem schwenkbaren oberen Verbinder (10), der durch einen Schnelllösehaken (16) abschließt, und einem Verbinderhalter (24) nach mindestens einem der Ansprüche 1-9, der einsetzbar ist, um eine Bewegung des oberen Verbinders einzuschränken, wenn das Ballelement (32) in der Mündung des Hakens (16) aufgenommen ist.

## Revendications

1. Support de biellette (24) destiné à limiter le mouvement d'une biellette pouvant pivoter (10) terminée par un crochet à libération rapide (16) sur un véhicule ou une machine, lequel crochet comporte une partie d'introduction avec une ouverture d'une dimension prédéterminée lorsque le crochet est fermé, dans lequel le support de biellette (24) comprend un corps allongé (26) et un élément sphérique (32) fixé sur une première extrémité du corps allongé, dans lequel l'extrémité opposée du corps allongé (26) peut être fixée sur le véhicule ou la machine et dans lequel l'élément sphérique (32) présente une section transversale supérieure à la dimension prédéterminée et est formé de manière à pouvoir être compressé à une section transversale inférieure à la dimension prédéterminée.

2. Support de biellette selon la revendication 1, l'élément sphérique (32) présentant une section transversale sensiblement en forme de C.

3. Support de biellette selon la revendication 2, l'élément sphérique (32) étant formé en une matière plastique flexible de manière élastique.

4. Support de biellette selon la revendication 3, dans lequel la matière plastique de l'élément sphérique (32) est du polyamide PA6.

5. Support de biellette selon la revendication 1, l'élément sphérique (32) présentant une section transversale sensiblement pleine et étant formé en un matériau à base de caoutchouc.

6. Support de biellette selon la revendication 5, dans lequel le matériau à base de caoutchouc de l'élément sphérique (32) est du caoutchouc EPDM.

7. Support de biellette selon la revendication 2, l'élément sphérique (32) étant constitué de première et seconde parties courbes (50, 52) une première extrémité de chacune (54) étant couplée de manière à pouvoir pivoter à l'autre et comprenant, en outre, des moyens élastiques (56) positionnés de manière à repousser les deux parties courbes (50, 52) à l'écart l'une de l'autre.

8. Support de biellette selon la revendication 7, dans lequel le moyen élastique (56) de l'élément sphérique (32) est un ressort ou un corps de matériau pouvant être compressé de manière élastique.

9. Support de biellette selon l'une quelconque des revendications 1 à 8, dans lequel le corps allongé (26) forme une partie de l'élément sphérique (32).

10. Élément sphérique (32) destiné à être utilisé avec le support de biellette (24) selon la revendication 1, présentant une section transversale sensiblement en forme de C, dans lequel l'élément sphérique (32) comprend des première et seconde parties courbes (50, 52) une première extrémité de chacune (54) étant couplée de manière à pouvoir pivoter à l'autre et comprenant, en outre, des moyens élastiques (56) positionnés de manière à repousser les deux parties courbes à l'écart l'une de l'autre.

11. Élément sphérique selon la revendication 10, dans lequel le moyen élastique (56) de l'élément sphérique (32) est un ressort ou un corps de matériau pouvant être compressé de manière élastique.

12. Tracteur agricole comportant une liaison de montage d'outillage à trois points comportant une biellette supérieure pouvant pivoter (10) terminée par un crochet à libération rapide (16), et un support de biellette (24) selon l'une quelconque des revendications 1 à 9, pouvant être déployé de manière à limiter le mouvement de la biellette supérieure lorsque l'élément sphérique (32) est reçu dans l'ouverture du crochet
